# DEMANDE DE BREVET EUROPEEN

(11) **EP 2 630 866 A1**
(43) Date de publication de la demande: **28.08.2013**
(21) Numéro de dépôt: 13155884.3
(22) Date de dépôt: 20.02.2013
(51) Int. Cl.: A21B 3/02, A21B 3/07

(54) **Porte de four à soles comprenant une surface de butée pour l'enfourneur**

(30) Priorité: 22.02.2012 FR 1251584
(71) Demandeur: EUROFOURS, 59144 Gommegnies (FR)
(72) Inventeur: Airoldi, Frédéric, 51120 SEZANNE (FR); Lemoine, Jérôme, 59460 JEUMONT (FR)
(74) Mandataire: Balesta, Pierre

(57) **Abrégé**

L'invention concerne une porte de four à soles (12) comprenant une paroi (30), ladite paroi s'étendant selon une direction longitudinale (L) et ayant des extrémités longitudinales ainsi que des bords supérieur et inférieur (30c, 30d), ladite porte étant pivotante autour d'un axe de pivotement (A) parallèle à la direction longitudinale.

L'invention se caractérise par le fait que ladite porte comporte en outre au moins une surface de butée (32) fixée à la paroi, ladite surface de butée étant configurée pour coopérer avec un bord d'extrémité (14a) d'un enfourneur mobile (14) dudit four lors de l'introduction de l'enfourneur dans le four afin de faire pivoter ladite porte autour de son axe de pivotement (A), et étant constituée par un bord périphérique d'une aile fixée à la paroi, ladite aile s'étendant selon une direction transversale de la paroi (30).

## Description

### Arrière-plan de l'invention

La présente invention concerne le domaine technique des fours de boulangerie-pâtisserie.

Elle concerne plus précisément le domaine des fours à soles, et notamment les portes de tels fours.

Traditionnellement, une porte de four à soles comprend une paroi, ladite paroi s'étendant selon une direction longitudinale et ayant des extrémités longitudinales ainsi que des bords supérieur et inférieur, ladite porte étant pivotante autour d'un axe de pivotement parallèle à la direction longitudinale.

La porte de four à soles est destinée à obturer une chambre de cuisson du four.

Les fours à soles comportent généralement plusieurs chambres de cuisson superposées, de sorte qu'un four comprend également plusieurs portes.

Afin de pouvoir enfourner ses pains dans l'une ou l'autre des chambres de cuisson, le boulanger doit ouvrir la porte avant d'introduire, dans la chambre de cuisson, l'enfourneur sur lequel sont disposés les pains.

Il est également fréquent que le boulanger ouvre cette porte afin de surveiller la cuisson des pains.

Plusieurs mécanismes d'ouvertures de porte ont été imaginés. On connait par exemple un mécanisme comportant une poignée d'actionnement ménagée dans la façade du four. Selon ce principe, FR 2 884 276 propose un mécanisme d'ouverture de la porte comportant un organe de manipulation fixé à un bras de liaison traversant un bord de la façade du four. Le bras de liaison présente des évidements coopérant avec des axes d'articulation d'un plateau de commande pivotable.

Un tel mécanisme comportant de nombreuses pièces d'actionnement est complexe et couteux. En outre, il nécessite une action manuelle de l'utilisateur sur la poignée afin d'ouvrir la porte de la chambre de cuisson. Enfin, les ouvertures ménagées dans la façade peuvent causer l'introduction néfaste de farine dans le carter du four.

On connaît également des portes dont la surface coopère avec un bord d'extrémité d'un enfourneur mobile lors de l'introduction de l'enfourneur dans le four, afin de faire pivoter la porte autour de son axe de pivotement ; de telles portes sont en particulier décrites par les documents FR 1 516 330, DE 10 2006 008153 et AT 391 979.

Cependant, dans ces dispositifs, les contacts directs entre la porte et l'enfourneur, lors de l'introduction et du retrait de l'enfourneur, risquent, entre autres, d'endommager la porte et l'enfourneur.

### Objet et résumé de l'invention

Un but de l'invention est de proposer une porte de four à soles remédiant aux inconvénients précités.

L'invention atteint son but par le fait que ladite porte comporte en outre au moins une surface de butée fixée à la paroi, ladite surface de butée étant configurée pour coopérer avec un bord d'extrémité d'un enfourneur mobile dudit four lors de l'introduction de l'enfourneur dans le four afin de faire pivoter ladite porte autour de son axe de pivotement, la surface de butée étant constituée par un bord périphérique d'une aile fixée à la paroi, ladite aile s'étendant selon une direction transversale de la paroi.

On comprend donc que la porte du four selon l'invention s'ouvre automatiquement lors de l'introduction de l'enfourneur dans le four, contrairement aux fours antérieurs dans lesquels l'utilisateur devait agir manuellement sur un organe de commande avant d'introduire l'enfourneur dans le four.

On comprend également que c'est l'enfourneur, dans son mouvement d'introduction dans le four, qui réalise l'ouverture de la porte en poussant sur la surface de butée.

Ainsi, grâce à l'invention, l'utilisateur n'a plus à se soucier de l'ouverture de la porte du four lors de l'opération d'enfournement.

Un autre intérêt de l'invention est que la porte se referme toute seule lorsque l'enfourneur est retiré de la chambre de cuisson. Autrement dit, l'utilisateur n'a pas non plus à se soucier de la fermeture de la porte du four, notamment lors de l'opération de désenfournement. Cette fermeture automatique de la porte offre un confort d'utilisation au boulanger qui peut se concentrer sur l'opération d'enfournement. En particulier, il ne risque pas d'oublier de fermer l'une des portes de fours.

Encore un autre intérêt de l'invention est qu'elle rend l'opération d'enfournement bien plus rapide qu'avec les fours de l'art antérieur, dès lors que le boulanger n'a plus à manipuler les différents leviers pour ouvrir et refermer les portes du four, étant souligné que certains fours à soles peuvent comporter une dizaine de leviers de commande.

Un intérêt supplémentaire de l'invention est que l'enfourneur coopère avec la porte du four, sans contact direct entre les deux éléments, de manière à éviter tout risque de détérioration de la porte ou de l'enfourneur, en particulier lors de l'introduction de l'enfourneur dans le four.

Avantageusement, la surface de butée présente une forme courbe, afin de réaliser une ouverture progressive de la porte lors du contact entre l'enfourneur et la surface de butée.

Par cette configuration, la surface de butée permet également une fermeture progressive de la porte, lors du retrait de l'enfourneur.

De préférence, considérée dans un plan orthogonal à l'axe de pivotement, la surface de butée présente la forme d'une développante de cercle. Un intérêt est d'améliorer encore la progressivité de l'ouverture de la porte lorsque l'enfourneur pousse la surface de butée, ainsi que celle de la fermeture de la porte, lorsque l'enfourneur est retiré hors du four.

De préférence, considérée dans ledit plan orthogonal à l'axe de pivotement, la forme courbe s'étend depuis le bord supérieur de la paroi, tout en convergeant vers le bord inférieur de la paroi.

Avantageusement, ladite aile s'étend perpendiculairement à la paroi selon une direction transversale de la paroi depuis le bord supérieur de la paroi.

De préférence, l'axe de pivotement et l'aile sont disposés à proximité du bord supérieur de la paroi.

Encore de préférence, l'aile s'étend sur au moins un tiers de la largeur de la porte.

Par largeur de la porte, on entend la direction s'étendant entre un bord supérieur et un bord inférieur de la porte. Par longueur de la porte, on entend la direction s'étendant entre les deux bords latéraux de la porte.

Selon un autre aspect avantageux de l'invention, l'aile comporte un évidement central de sorte que ladite aile constitue une poignée de préhension permettant de manipuler la porte.

Ainsi, l'aile présente une double fonction : d'une part, elle permet l'ouverture automatique de la porte, et d'autre part elle forme une poignée permettant d'ouvrir manuellement la porte si nécessaire, par exemple pour surveiller la cuisson.

De préférence, la poignée de préhension est réalisée dans un matériau thermiquement isolant, et ce afin d'améliorer le confort d'utilisation de la porte.

Selon un mode de réalisation préférentiel, la porte comporte deux surfaces de butée disposées aux extrémités longitudinales de la paroi. De préférence, la porte comporte deux poignées de préhension portant ces deux surfaces de butée, les deux poignées étant donc disposées aux extrémités longitudinales de la paroi. Un intérêt est que les poignées peuvent être utilisées pour saisir la porte afin de la démonter du four.

Préférentiellement, la paroi comporte un carter, ainsi qu'une portion vitrée fixée au carter, et la surface de butée est fixée au carter.

Le carter recouvre de préférence la partie supérieure de la face avant de la paroi.

Dans le mode de réalisation préférentiel, le carter présente une portion formant enjoliveur qui s'étend horizontalement lorsque la porte est fermée, et la surface de butée s'étend à partir d'une extrémité de la portion formant enjoliveur.

La portion formant enjoliveur s'étend de préférence depuis la partie supérieure de la poignée de préhension.

Pour réaliser la liaison pivot entre la porte et le four, la porte selon l'invention comporte en outre un support fixé à la portion vitrée de l'autre côté de la surface de butée, ce support portant deux ergots coaxiaux à l'axe de pivotement de la porte.

De manière avantageuse, la porte est équilibrée axialement autour de son axe de pivotement, ce qui permet de faciliter le pivotement de la porte lors de l'introduction de l'enfourneur, ou lors de l'ouverture manuelle de la porte.

La présente invention porte en outre sur une four à soles comportant un enfourneur mobile et au moins une porte selon l'invention, dans lequel l'enfourneur mobile présente un bord d'extrémité destiné à venir en contact contre la surface de butée de la porte lors de l'introduction de l'enfourneur dans le four, afin d'ouvrir la porte par pivotement autour de l'axe de pivotement.

Le bord d'extrémité est situé à l'extrémité longitudinale de l'enfourneur située à proximité du four.

Avantageusement, la surface de butée est conformée pour coopérer, au moment de l'ouverture de la porte, avec un organe de roulement situé sur le bord d'extrémité de l'enfourneur mobile.

De préférence, l'organe de roulement est une roulette, par exemple en élastomère. Cette roulette est configurée pour rouler le long de la surface de butée tout en la poussant dans un sens d'ouverture de la porte.

La combinaison de la roulette et de la forme courbe de la surface de butée améliore encore la progressivité de l'ouverture de la porte. Ainsi, même lors d'une introduction rapide de l'enfourneur dans la chambre de cuisson, le contact entre la roulette et la surface de butée entraine une ouverture progressive de la porte, grâce à quoi on évite avantageusement d'endommager la porte ou l'enfourneur.

De préférence, la porte comporte deux surfaces de butée qui sont constituées par les bords périphériques de deux ailes formant poignées de préhension, lesdites poignées de préhension étant disposées aux extrémités longitudinales de la porte.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** est une vue en perspective du four à soles selon l'invention comportant une pluralité de portes conformes à l'invention ;
- la figure **2** est une vue de côté du four à soles de la figure **1****,** l'élévateur-enfourneur étant en position basse, la porte de la chambre de cuisson inférieure étant fermée ;
- la figure **2A** est une vue de détail de la figure **2** montrant l'une des poignées de préhension de la porte du four, la porte étant fermée ;
- la figure **3** correspond à la figure **2** où l'enfourneur est en phase d'introduction dans la chambre de cuisson inférieure, la porte du four étant ouverte ; et
- la figure **3A** est une vue de détail de la figure **3** montrant la poignée de préhension.

### Description détaillée de l'invention

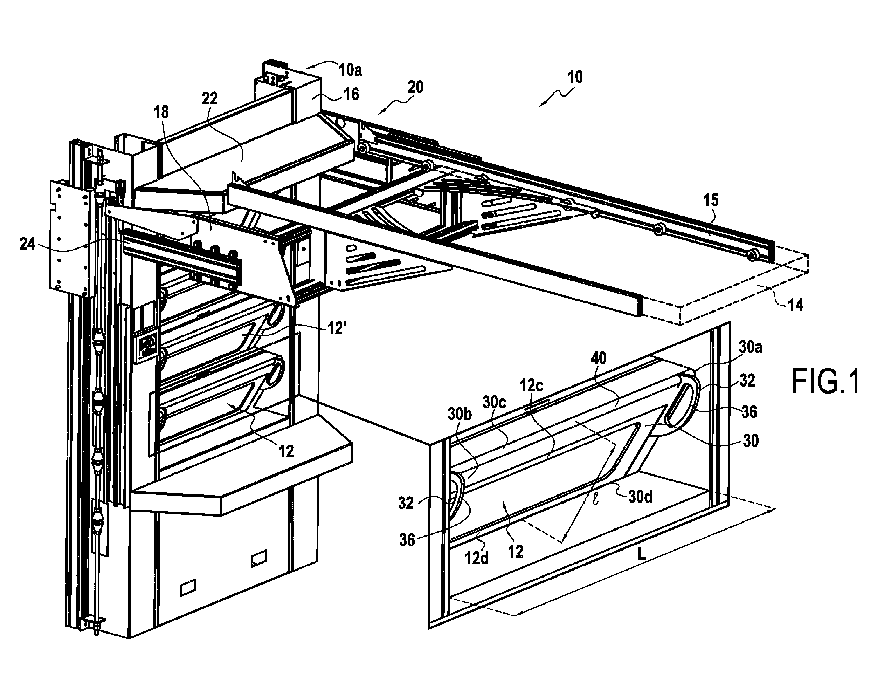

Sur la figure **1****,** on a représenté la partie frontale d'un four à soles **10.** Ce four à soles **10** comporte une pluralité de chambres de cuisson **13** disposées les unes sur les autres. Dans cet exemple, le four **10** comporte quatre chambres de cuisson qui sont obturées par des portes **12, 12', 12", 12"'** conformes à la présente invention. La porte selon l'invention pourrait bien entendu être montée sur d'autres types de fours à soles.

Le four à soles **10** comporte également un enfourneur **14** monté coulissant selon une direction horizontale perpendiculaire à la façade **16** du four **10 ;** l'enfourneur **14** étant plus précisément monté coulissant sur le corps **18** d'un élévateur **20.** Ce corps comporte des traverses de guidage horizontales **15** dans lesquelles l'enfourneur **14** est monté coulissant.

De manière connue, l'élévateur **20** permet le déplacement vertical de l'enfourneur **14** afin de l'amener devant l'une ou l'autre des chambres de cuisson **13, 13', 13", 13"'.**

Sur la figure **1****,** l'enfourneur **14** est disposé en section supérieure **10**a du four au niveau de la hotte d'extraction **22.**

Le corps **18** de l'élévateur **20** est fixé à des bras **24** mobiles selon une direction verticale. Ces bras **24** sont mus par des moyens de déplacement connus par ailleurs.

Dans l'exemple de la figure **1****,** chacune des portes **12, 12', 12", 12"'** présente une longueur **L** et une largeur **I.**

Sur la figure **1****,** on a représenté les portes du four en position fermée.

Si l'on s'intéresse plus particulièrement à la porte **12** obturant la chambre de cuisson inférieure **13,** on constate que ladite porte comprend une paroi **30** s'étendant selon une direction longitudinale, en l'espèce selon la longueur **L** de la porte. Cette paroi **30** présente des extrémités longitudinales **30**a, **30**b. La paroi comporte en outre des bords supérieur **12**c et inférieur **12**b.

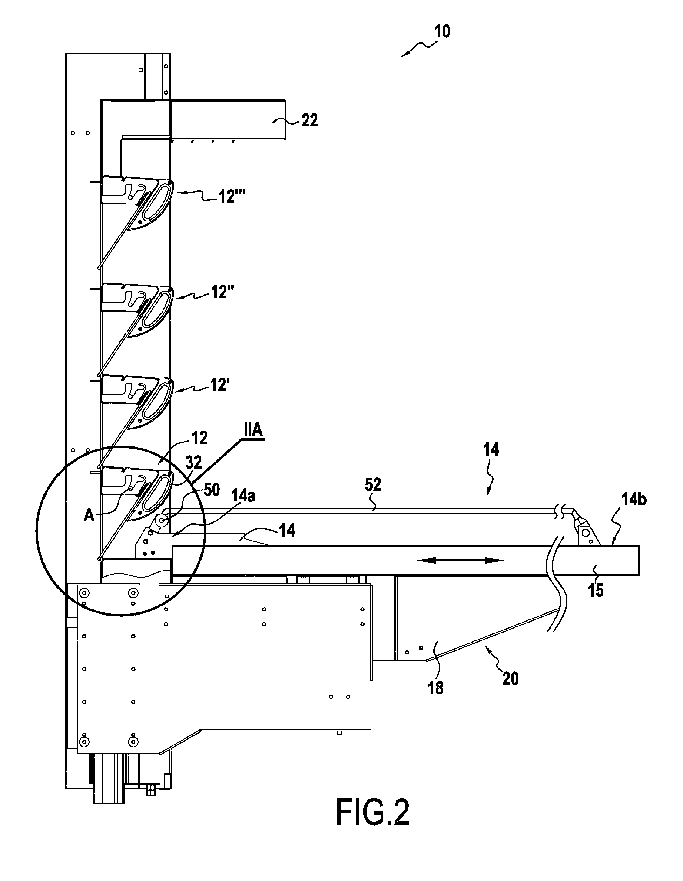

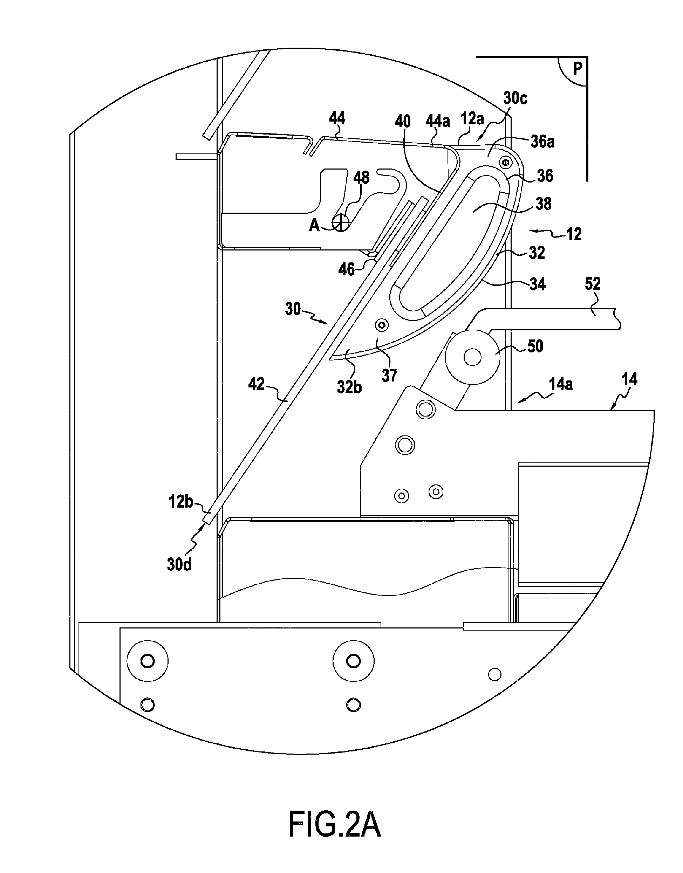

En se référant maintenant à la figure **2****,** on comprend que la porte **12** est pivotante autour d'un axe de pivotement **A** parallèle à la direction longitudinale, ou longueur, **L.**

Dans cet exemple, l'axe de pivotement **A** s'étend horizontalement de manière parallèle à la façade du four.

Sur la figure **2****,** on a représenté l'élévateur **20** en position basse, l'enfourneur **14** étant en vis-à-vis de la chambre de cuisson inférieure **13** schématisée en pointillés sur la figure **2****.**

Conformément à l'invention, la porte **12** comporte en outre une surface de butée **32** qui est fixée à la paroi **30.**

A l'aide de la figure **2**A, on constate que la surface de butée **32** présente une forme courbe, et que dans cet exemple particulier, considérée dans un plan **P** orthogonal à l'axe de pivotement, la surface de butée **32** présente la forme d'une développante de cercle.

Dans cet exemple, le plan **P** est un plan vertical perpendiculaire à la façade du four. La surface de butée de forme courbe présente une forme convexe dont la partie bombée est dirigée vers l'extrémité avant de l'enfourneur.

On constate également, que, considérée dans le plan **P** orthogonal à l'axe de pivotement **A,** la forme courbe **32** s'étend depuis le bord supérieur **12**a de la paroi tout en convergeant vers le bord inférieur **12**b de la paroi.

Plus précisément, la surface de butée est constituée par un bord périphérique **34** d'une aile **36** fixée à la paroi **30.**

Comme on le comprend à l'aide des figures **1** et **2****,** l'aile **36** s'étend perpendiculairement à la paroi **30** selon la largeur **I de** la paroi **30** depuis le bord supérieur de la paroi.

On constate également sur la figure **2**A, que l'aile **36** est disposée sensiblement sur la moitié supérieure de la porte, l'axe de pivotement **A** et l'aile **36** étant disposés à proximité du bord supérieur de la paroi **30.**

Dans cet exemple, l'aile **36** s'étend selon la largeur de la porte, sur au moins un tiers de la largeur de la porte.

L'aile **36** est également munie d'un évidement central **38** qui s'étend sensiblement sur toute la longueur de l'aile **36,** de sorte que ladite aile **36** constitue une poignée de préhension **37** permettant de manipuler la porte **12.**

De préférence, la longueur de l'évidement **38** est configurée pour que l'aile **36** puisse être saisie par une main.

Dans la mesure où cette poignée de préhension est destinée à permettre l'ouverture ou la fermeture, et d'une manière plus générale, la manipulation de la porte **12,** ladite poignée est réalisée avantageusement dans un matériau thermiquement isolant afin d'éviter que le boulanger ne se brûle lorsqu'il manipule la porte.

En se référant à nouveau à la figure **1****,** on constate que la porte selon l'invention comporte deux surfaces de butée **32** disposées aux extrémités longitudinales **30**a, **30**b de la paroi **30.**

Plus exactement, ces deux surfaces de butée **32** sont constituées par les bords périphériques de deux ailes **36** formant poignée de préhension, ces poignées de préhension étant disposées aux extrémités longitudinales de la porte **12.**

Autrement dit, la porte selon l'invention comporte deux poignées de préhension disposées aux extrémités longitudinales de ladite porte.

En se référant à nouveau à la figure **2**A, on constate que la paroi **30** comporte un carter **40,** ainsi qu'une portion vitrée **42** fixée au carter, par exemple par collage, la surface de butée **32** étant quant à elle fixée au carter **40.** Plus précisément, dans cet exemple, l'aile **36** est fixée au carter **40.**

Le carter **40** comporte en outre une portion **44** formant enjoliveur qui s'étend depuis une extrémité supérieure **36**a de l'aile **36,** cette portion formant enjoliveur s'étendant sensiblement horizontalement vers la chambre de cuisson **13** lorsque la porte **12** est fermée.

Autrement dit, la surface de butée **32** s'étend à partir d'une extrémité **44**a de la portion formant enjoliveur **44.**

En se référant à la figure **1****,** on constate que la carter **40** s'étend sensiblement sur toute la longueur de la porte **12.**

Pour permettre le pivotement de la porte **12** par rapport au four, il est prévu un support **46** fixé à la portion vitrée **42** de l'autre côté de la surface de butée **32,** ce support **46** portant deux ergots **48** coaxiaux à l'axe de pivotement **A** de la porte **12.**

La porte est par ailleurs équilibrée axialement autour de son axe de pivotement **A.** Pour ce faire, elle comporte des masselottes fixées au support **46.**

Par conséquent, le centre de gravité de la porte est situé sur l'axe de pivotement **A.**

L'enfourneur **14** s'étend quant à lui selon une direction horizontale orthogonale à la façade du four **10,** l'enfourneur **14** présentant une extrémité avant **14**a disposée du côté du four et une extrémité arrière **14**b.

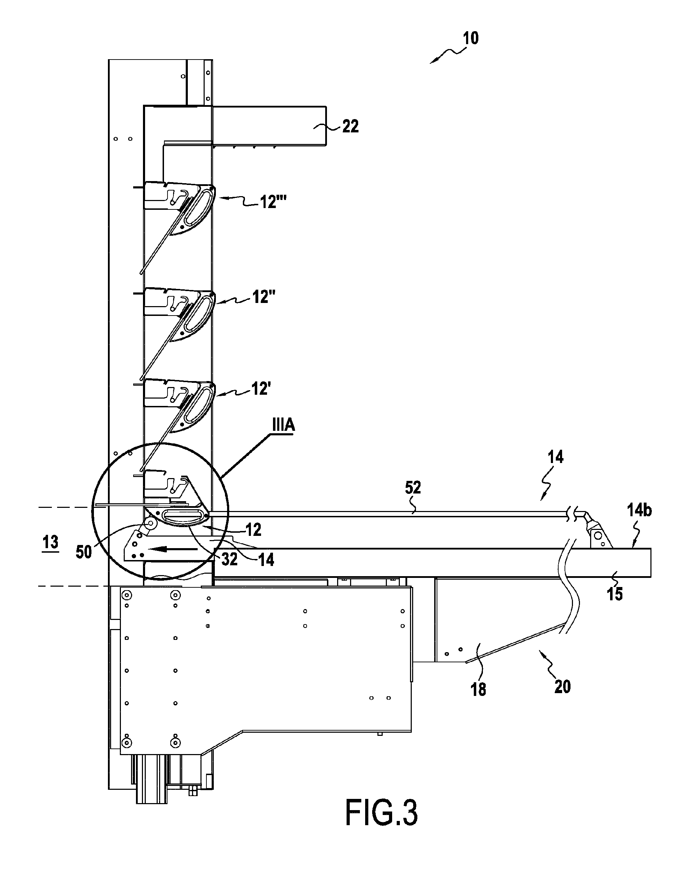

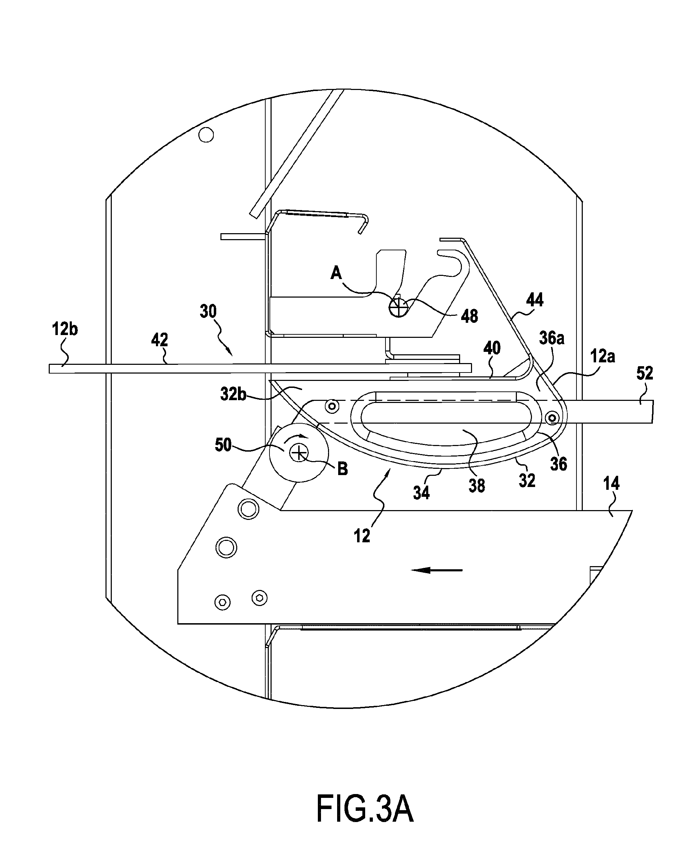

A l'aide des figures **2** et **3****,** on comprend que la surface de butée **32** est configurée pour coopérer avec le bord d'extrémité avant **14**a de l'enfourneur **14** lorsque ce dernier est introduit dans le four. Plus précisément, lors du déplacement de l'enfourneur **14** vers la chambre de cuisson **13,** le bord d'extrémité **14**a de l'enfourneur **14** vient au contact de la surface de butée **32,** ce qui provoque la rotation de la porte **12** autour de l'axe de pivotement **A.** Ce pivotement entraîne donc l'ouverture de la porte **12.**

Pour ce faire, le bord d'extrémité **14**a de l'enfourneur **14** est muni d'un organe de roulement **50** situé sur le bord d'extrémité **14**a de l'enfourneur **14.**

Dans cet exemple, l'organe de roulement **50** est constitué d'une roue libre élastomère qui réalise l'impact sur la surface de butée **32** de l'aile **36.**

Comme on le comprend en comparant les figures **2**A et **3**A, l'organe de roulement présente une trajectoire rectiligne passant en dessous de l'axe de pivotement de manière à venir en butée contre une portion inférieure **32**b de la surface de butée **32.**

Lorsque la roulette **50** vient au contact de la surface de butée **32,** elle roule le long de la surface de butée **32** en tournant autour de son axe **B** tout en faisant pivoter l'aile **36** autour de l'axe de pivotement **A.**

En position ouverte, telle que représentée sur la figure **3**A, la porte **12** est telle que la surface vitrée **42** s'étend dans un plan sensiblement horizontal.

La porte **12** est maintenue en position ouverte grâce à des guides longitudinaux **52** montés sur l'enfourneur **14** qui passent en dessous de la paroi **30** de la porte tout en supportant cette dernière.

Autrement dit, en position ouverte de la porte, la paroi **30** repose sur les guides **52,** ce qui empêche la porte de rebasculer en position fermée.

Lors de l'opération de retrait de l'enfourneur **14,** c'est-à-dire pendant le désenfournement, la roulette **50** vient également au contact de la surface de butée **32** ce qui provoque le pivotement de l'aile **36** et de la porte autour de l'axe de pivotement **A** dans un sens de fermeture de la porte **12,** grâce à quoi la porte **12** se referme automatiquement, et de manière progressive, sans intervention du boulanger.

## Revendications

1. Porte de four à soles (12) comprenant une paroi (30), ladite paroi s'étendant selon une direction longitudinale (L) et ayant des extrémités longitudinales (30a, 30b) ainsi que des bords supérieur et inférieur (30c, 30d), ladite porte étant pivotante autour d'un axe de pivotement (A) parallèle à la direction longitudinale, **caractérisée en ce que** ladite porte comporte en outre au moins une surface de butée (32) fixée à la paroi, ladite surface de butée étant configurée pour coopérer avec un bord d'extrémité (14a) d'un enfourneur mobile (14) dudit four lors de l'introduction de l'enfourneur dans le four afin de faire pivoter ladite porte autour de son axe de pivotement (A), la surface de butée (32) étant constituée par un bord périphérique d'une aile fixée à la paroi, ladite aile s'étendant selon une direction transversale de la paroi (30).

2. Porte selon la revendication **1, caractérisée en ce que** la surface de butée (32) présente une forme courbe.

3. Porte selon la revendication **2, caractérisée en ce que**, considérée dans un plan (P) orthogonal à l'axe de pivotement, la surface de butée présente la forme d'une développante de cercle.

4. Porte selon la revendication **2** ou **3, caractérisée en ce que**, considérée dans ledit plan orthogonal à l'axe de pivotement, la forme courbe s'étend depuis le bord supérieur (30c) de la paroi, tout en convergeant vers le bord inférieur (30d) de la paroi.

5. Porte selon l'une quelconque des revendications **1 à 4, caractérisée en ce que** ladite aile s'étend perpendiculairement à la paroi, depuis le bord supérieur de la paroi.

6. Porte selon la revendication **5, caractérisée en ce que** l'axe de pivotement (A) et l'aile (36) sont disposés à proximité du bord supérieur (30c) de la paroi.

7. Porte selon la revendication **5** ou **6, caractérisée en ce que** l'aile (36) s'étend sur au moins un tiers de la largeur de la porte.

8. Porte selon la revendication **6** ou **7, caractérisé en ce que** l'aile (36) comporte un évidement central (38) de sorte que ladite aile (36) constitue une poignée de préhension (37) permettant de manipuler la porte.

9. Porte selon la revendication **8, caractérisée en ce que** la poignée de préhension (37) est réalisée dans un matériau thermiquement isolant.

10. Porte selon l'une quelconque des revendications **1 à 9, caractérisée en ce que** la porte comporte deux surfaces de butée (32) disposées aux extrémités longitudinales de la paroi.

11. Porte selon l'une quelconque des revendications **1 à 10, caractérisée en ce que** la paroi comporte un carter (40), ainsi qu'une portion vitrée (42) fixée au carter, et **en ce que** la surface de butée est fixée au carter.

12. Porte selon la revendication **11, caractérisée en ce que** le carter présente une portion formant enjoliveur (44) qui s'étend horizontalement lorsque la porte est fermée, et **en ce que** la surface de butée s'étend à partir d'une extrémité (44a) de la portion formant enjoliveur.

13. Porte selon la revendication **11** ou **12, caractérisée en ce qu'**elle comporte en outre un support (46) fixé à la portion vitrée de l'autre côté de la surface de butée, ce support portant deux ergots (48) coaxiaux à l'axe de pivotement (A) de la porte.

14. Porte selon l'une quelconque des revendications **1 à 13, caractérisée en ce que** ladite porte (12) est équilibrée axialement autour de son axe de pivotement.

15. Four à soles (10) comportant un enfourneur (14) mobile et au moins une porte (12, 12', 12", 12"') selon l'une quelconque des revendications **1 à 14, caractérisé en ce que** l'enfourneur mobile présente un bord d'extrémité (14a) destiné à venir en contact contre la surface de butée (32) de la porte lors de l'introduction de l'enfourneur dans le four, afin d'ouvrir la porte par pivotement autour de l'axe de pivotement.

16. Four à soles selon la revendication **15, caractérisé en ce que** la surface de butée (32) est conformée pour coopérer, au moment de l'ouverture de la porte (12), avec un organe de roulement (50) situé sur le bord d'extrémité de l'enfourneur mobile.

17. Four à soles selon la revendication **15** ou **16, caractérisé en ce que** la porte comporte deux surfaces de butée (32) qui sont constituées par les bords périphériques de deux ailes (36) formant poignées de préhension, lesdites poignées de préhension étant disposées aux extrémités longitudinales de la porte.
